# EUROPEAN PATENT SPECIFICATION

(11) **EP 2 874 896 B1**
(45) Date of publication and mention of the grant of the patent: **22.03.2017**
(21) Application number: 13819706.6
(22) Date of filing: 15.07.2013
(51) Int. Cl.: B65D 43/02, A47G 19/22, B29C 51/10

(54) **SPILL RESISTANT DISPOSABLE TRAVEL CUP LID**
AUSLAUFRESISTENTER EINWEGBECHERDECKEL FÜR REISEN
COUVERCLE DE GOBELET DE VOYAGE JETABLE ANTI-RENVERSEMENT

(30) Priority: 17.07.2012 US 201261672514 P; 07.03.2013 US 201361774471 P
(43) Date of publication of application: 27.05.2015
(73) Proprietor: Crudgington, Cleveland, Benedict, Monrovia, California 91016-2243 (US)
(72) Inventor: Crudgington, Cleveland, Benedict, Monrovia, California 91016-2243 (US)
(74) Representative: Collins, John David
(86) International application number: PCT/US2013/050562
(87) International publication number: WO 2014/014844

(56) References cited:
- DE-U1-202005 018 994
- US-A1- 2005 173 443
- US-A1- 2005 173 443
- US-A1- 2006 071 008
- US-A1- 2009 266 828
- US-A1- 2009 308 882
- US-A1- 2009 308 882
- US-A1- 2011 049 171

## Description

### BACKGROUND

### Technical Field

This disclosure relates to disposable lids for travel beverage cups and, more particularly, to disposable dome lids that may be placed over the lip of a beverage cup and that provide a drink-through opening near the perimeter of the lid's top surface so that a seal is formed by the user's mouth for easy drinking access to the beverage, especially while traveling.

It further relates to a method of forming and cutting said lid from an unformed thermoplastic sheet.

### Description of the Related Art

With many consumers on the go, carryout beverages are more often than not intended to be consumed in moving vehicles, *i.e.,* automobiles, airplanes, golf carts, boats, etc., or while walking, power walking and even jogging. Disposable lids of the kind that provide a seal between the user's mouth and a small drink-through opening, have proven more suited for prevention of spills during consumption while on the move, than lids with a tear-off flap that exposes a large section for drinking. This observation is based on the widespread acceptance of this type of lid used by take-out food and drink establishments. And with the growing consumption of beverages intended to be consumed while on the move, the need for improvements that reduce spills, has never been greater. Of greatest concern is the safety to the customer behind the steering wheel. Besides the annoyance of soiling one's clothing and vehicle interior, the sudden distraction resulting from a spill could result in an automobile accident and personal injury.

Prior disposable travel lids have an inherent shortcoming. When a relatively full cup is jostled as is often the case while moving about, the sloshing beverage is vulnerable to splashing out through the drink-through opening even when the hole is relatively small. Attempts have been made to address this concern by introducing devices to seal the drink-through opening when the beverage is not being consumed. However, previously presented disposable cup lids offer sealing methods that require manipulation to momentarily remove the sealing device so that the user is able to sip the beverage. While this methodology is practical if simply transporting the unconsumed beverage from one location to another, it is both cumbersome and impractical for occasional consumption while on the go. The present disclosure addresses this shortcoming by setting forth a novel embodiment having a passive integrated barrier within the disposable cup lid that adequately seals the drink-through opening while the beverage is not being consumed yet permits the consumer to drink from the cup in an enjoyable and satisfying manner.

Prior patents have identified concern for accidental spillage and have suggested means to provide a solution for sealing a disposable dome lid with a small drink-through opening: Clark, U.S. Patent No. 6,644,490; Giraud, U.S. Patent No. 6,886,707; Smith et al, U.S. Patent No. 7,134,566; Zuares et al., U.S. Patent No. 8,235,236 and others describe variations of a flexible arm having a closure member that requires manipulation in order to access and reseal the drink-through opening between sips. Wong, U.S. Patent No. 6,824,003, describes a disposable dome lid having a sliding member that, when engaged by the user, can be slid back and forth to open or close the drink-through orifice between each sip of the beverage. While this concept in theory suggests an effective barrier to selectively seal the orifice, manufacturing costs may well prove the concept to be less desirable. Crudgington, U.S. Patent No. 7,591,393, which is the inventor's prior patent, describes a singular, multi-planar drink-through hole below the drink-through orifice, intended to deflect a sloshing beverage from ejecting up through the opening. However, the passive restriction barrier proves insufficient to prevent a jostled cup from spilling.

US Patent No. 20050173443 discloses a disposable dome lid according to the preamble of claim 1 and a method of forming said lid.

### BRIEF SUMMARY

This disclosure sets forth a number of novel features for a disposable dome lid, each of which decreases the likelihood of accidental spills as well as increasing the comfort to the user. These features can be implemented alone or in combination to maximize the overall benefits. Of particular importance is the introduction of a drink-through orifice that includes a flap configured to close off the drink-through opening while the user is not consuming the beverage. Thus, when a relatively full cup is jostled, the sloshing beverage is restricted from splashing out. Conversely, while the user takes a sip, the flap yields and permits the beverage to flow through the drink-through orifice with sufficient ease to be a satisfying experience. The user generates the desired flow by gently "pulling" the beverage out from the cup.

The likelihood of accidental spills is further reduced by: 1) recessing the required vent hole within a spill cavity; 2) improving the seal between the lid and the user's mouth; and 3) modifying the drink hole so froth foaming up through the lid is directed into a spill cavity rather than flowing over the cup's edge.

In accordance with one aspect of the present disclosure, a lid for a cup is provided according to claim 1.

In accordance with a further aspect of the present disclosure, a method of forming and cutting a lid for a cup is provided according to claim 9.

### BRIEF DESCRIPTION OF THE DRAWINGS

The foregoing and other features and advantages of the present disclosure will be more readily appreciated as the same become better understood from the following detailed description when taken in conjunction with the accompanying drawings. It should be understood that the preferred embodiments are to be considered in all respects illustrative and not restrictive, wherein:
Figure 1 is an isometric view illustrating the disposable cup lid with all embodiments in the present disclosure including a chamber located below the drink-through orifice and having a singular flap at its base;
Figure 2 is an isometric view illustrating the disposable lid mounted upon a disposable cup with the profile of a user's mouth engaged with the lid in the process of beverage consumption;
Figure 3 is an isometric view illustrating the disposable cup lid with preferred features including a drink-through opening with a recessed interior ridge;
Figure 4 is an isometric view illustrating the disposable cup lid with preferred features including the recessed interior ridge;
Figures 5A and 5B illustrate two preferred flap configurations in a relaxed position and closed position, respectively;
Figure 6 is a fragmentary cross-sectional isometric view of a chamber below the drink-through orifice formed in accordance with the present disclosure illustrating the flap of Figure 5A cut into the base of the chamber;
Figure 7 is a fragmentary isometric view featuring the drink-through orifice with the flap of Figure 5A folded upward in the open and non-relaxed position as would be during consumption of the beverage;
Figure 8 is a fragmentary cross-sectional isometric view of the drink-through orifice of Figure 7 illustrating the flap in an opened position;
Figure 9 is a cross-sectional side view illustrating the disposable dome lid with all of the preferred embodiments of the present invention;
Figure 10 is a top view illustrating the disposable dome lid with all of the preferred embodiments of the present invention;
Figure 11 is a fragmentary cross-sectional isometric view of a drinking straw inserted into the drink-through orifice;
Figure 12 is a cross-sectional isometric view illustrating the profile of a channel within the base of a spill cavity where a vent hole is positioned;
Figure 13 is a cross-sectional side view illustrating the tooling in position for die cutting a flap and vent/drain hole within a thin-walled molded cup lid;
Figure 14 is an enlarged fragmentary cross-sectional elevation view detailing the chamber block die for cutting into the chamber depicted in Figure 13;
Figures 15A-15B illustrate the proposed chamber block die depicted in Figures 13 and 14 for cutting the two flap configurations shown in Figures 5A and 5B;
Figure 16 is an isometric view of the proposed vent block die depicted in Figure 13 for cutting the vent/drain hole shown in Figures 1, 3 and 10;
Figure 17 is a cross-sectional side view illustrating an aligned floating block die prior to engaging with the chamber;
Figure 18 is a cross-sectional side view of the floating block die fully engaged with the chamber and cutting into the chamber;
Figure 19 is the tooling depicted in Figure 17 but where the floating block die is slightly misaligned with the chamber;
Figure 20 is the tooling depicted in Figure 19 showing the floating block die aligning with the chamber upon engaging with and cutting into the chamber;
Figure 21 is an isometric view of the floating block die depicted in Figures 17, 18, 19 and 20;
Figure 22 is a cross-sectional side view illustrating a floating mounting plate with mounted cutting tools in position for die cutting a thin-walled molded cup lid;
Figure 23 is a cross-sectional side view of Figure 22 with the cutting tools engaged in die cutting a thin-walled molded cup lid; and
Figure 24 is a cross-sectional isometric view of the floating mounting plate with mounted cutting tools for die cutting a thin-walled molded cup lid.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures or components or both associated with drinking cups, including but not limited to disposable drinking cups formed of paper, plastic, and the like, have not been shown or described in order to avoid unnecessarily obscuring descriptions of the embodiments.

Unless the context requires otherwise, throughout the specification and claims that follow, the word "comprise" and variations thereof, such as "comprises" and "comprising" are to be construed in an open inclusive sense, that is, as "including, but not limited to." The foregoing applies equally to the words "including" and "having."

Reference throughout this description to "one embodiment" or "an embodiment" means that a particular feature, structure, or characteristic described in connection with the embodiment is included in at least one embodiment. Thus, the appearance of the phrases "in one embodiment" or "in an embodiment" in various places throughout the specification are not necessarily all referring to the same embodiment. Furthermore, the particular features, structures, or characteristics may be combined in any suitable manner in one or more embodiments.

A disposable dome lid for mounting upon the substantially circular lip or rim of a disposable drinking cup is disclosed. The lid includes a mounting portion that anchors upon the cup lip; an annular outer side wall portion sloping upwardly and radially inwardly from the mounting portion thereby providing a volume extension means within the lid. A top wall portion is formed at the top of the annular outer side wall portion enclosing the top of the annular outer side wall portion. A drink-through orifice is formed within the top wall portion and adjacent to the annular outer side wall portion, enabling drinking from the cup without removal of the lid and permitting the lips of a user drinking from the cup to encompass the drink-through orifice, with the lower lip of the user engaging with the annular outer side wall portion.

In its preferred configuration the drink-through orifice includes a singular flap located within a drink-through chamber below the lid's top wall. When the flap is in its relaxed position it prevents a drink-through opening and restricts sloshed liquid from exiting through the drink-through orifice. And when the flap is in its non-relaxed position it provides the drink-through opening and permits the beverage to flow through the drink-though orifice. The thermo-plastic material used in production is sufficiently thin and flexible to provide a flap or flaps that can open while the beverage is being consumed yet be sufficiently rigid to resist opening when confronted with a beverage that is sloshing within a generally upright cup. Understandably, other flap configurations may provide the intended result and the illustrated flap configurations should not be construed as the only possible configurations.

The following embodiments further define the preferred flap within a drink-through orifice: (1) A drink-through orifice that closes off a drink-through opening by a restriction barrier in the form of at least one flap; (2) the previously described flap that is integrated within the material comprising the disposable cup lid, thereby eliminating the need for assembly; (3) the previously described flap that in its relaxed or non-deformed state, closes off the drink-through opening; (4) the previously described flap that is concealed by being positioned within a chamber below the drink-through orifice, wherein the flap is hidden from the casual observer and tactually out of reach from the consumer's lips or tongue; (5) the previously described flap within the chamber which, in its non-relaxed and deformed state, momentarily folds into the volume defined by the chamber, thereby exposing the drink-through opening and permitting the flow of beverage; (6) the previously described flap which incorporates a "living hinge" positioned at the bottom of the chamber, where the thermo-formed material is inherently significantly thinner; (7) the previously describe living hinge where its resistance to folding into its non-relaxed state can be modifying by changing the depth or thickness or both depth and thickness of the chamber; (8) the previously described living hinge where its resistance to folding into its non-relaxed state can be modifying by increasing or decreasing the living hinge length; (9) the previously described flap that is created by stamping a cut into the base of the chamber; (10) the previously describe flap that is configured to yield to a drinking straw when pushed down into the drink-through orifice, thereby permitting the straw to become fully inserted into the drinking cup; and (11) the previously described disposable dome lid that is configured to enable a plurality of lids to be stacked in nested relation to each other.

In addition to the novel restriction barrier disclosed herein, other novel embodiments are disclosed for a disposable dome-shaped travel cup lid not because they are required in order for the flap's functionality, but because they further improve the disposable cup lid's resistance to accidental spills and enhance the user's comfort, including: (1) A spill cavity adjacent to the drink-through opening where an interior ridge formed by the boundary between these two features is recessed below the top wall thereby directing froth bubbling up through the drink-through opening to flow into the spill cavity; (2) a spill cavity including a small hole, for venting and possibly draining purposes, that is located near the lid's center where the level of a sloshing beverage remains relatively stable; (3) the previously described spill cavity further defined by an annular inner wall and an arcuate interior side wall, where the center of the arcuate interior side wall passes near the lid's center, thereby minimizing the size of the spill cavity while retaining its function; (4) the previously described spill cavity having a bottom wall that includes a narrow channel where, at its deepest portion, the previously describe vent hole is located, thereby shielding the hole from being blocked by the user's upper lip while minimizing the volume of the spill cavity; (5) the previously describe spill cavity having a pair of beveled recesses effectively narrowing the top wall surrounding the drink-through orifice thereby improving the comfort and seal between the user's mouth and lid and (6) a substantially planar interior top wall adjacent to a spill cavity, that is downwardly sloping away from a drink-through opening, thereby further improving the adaptability of the lid to the user's anatomy by providing additional room for the user's nose while the upper of the user's lips is positioned within the spill cavity.

Disposable cup lids are typically produced in large quantities by applying heat and pressure to form a thermo-plastic sheet that's placed over an array of singular molds, each of which forms a single lid. As a secondary production process, multiple lids are stamped out from each formed sheet. During this secondary process, desired holes and tear lines are also stamped into the lids. The flap or flaps set forth herein can be created during this stamping process. The present disclosure includes: (1) a process for vertically stamping within cavities formed in the previously describe dome lid with a singular vertical motion similar to that commonly used when stamping thermo-formed disposable cup dome lids, thereby simultaneously stamping flap, vent hole, and lid perimeter; (2) the previously described stamping method that enables a multiple of block dies used in stamping to self-align for simultaneous precision cutting of a multiple of lids from a single thermoplastic sheet.

All of the independent embodiments in this disclosure can be applied individually or in combination to improve any disposable dome having a small drink-through orifice near the lid's perimeter. All disposable dome lids, usually vacuum formed from thin-walled thermoplastic sheets, are designed to grip and seal upon an outwardly projecting ridge formed at the lip of disposable cups usually made from cardboard. Two methods for attaching disposable dome lids to cups have been described or illustrated in the art and are commonly used in practice. An original method referred to as the "ridge fit" provides an outwardly projecting annular ridge around the lid's apron that snaps into place when pushed over and mating with the cup's lip. The cup's lip has a slightly larger diameter than the lid's mounting ridge. Flexibility of the materials permits the annular apron to slide over the cup's lip and provide a liquid-tight seal. A more recently developed method of attachment utilizes an inverted annular groove surrounding the lid's base, forming what is referred to as a "groove fit." The lid is attached by "plugging" the cup's lip into the annular groove. There are advantages and disadvantages to each method of attachment. And even though only one method of attaching a disposable dome-shaped lid to a travel cup is selected for illustration purposes, all embodiments in this disclosure can be applied to either of these known methods and most likely any other method of attaching a disposable dome-shaped lid to a travel cup.

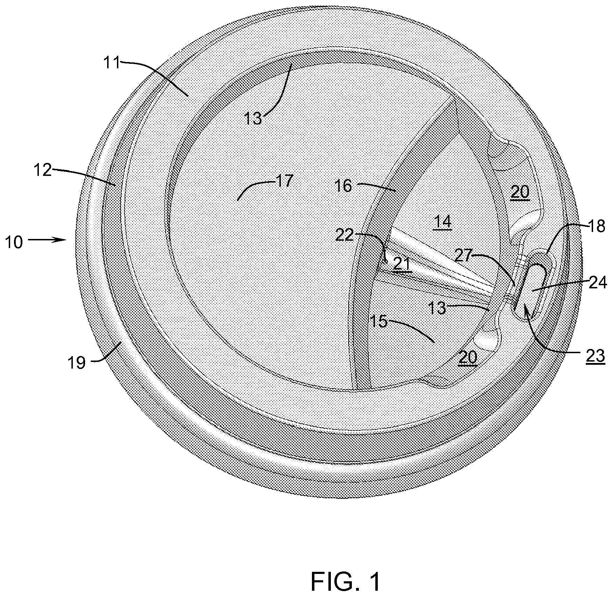

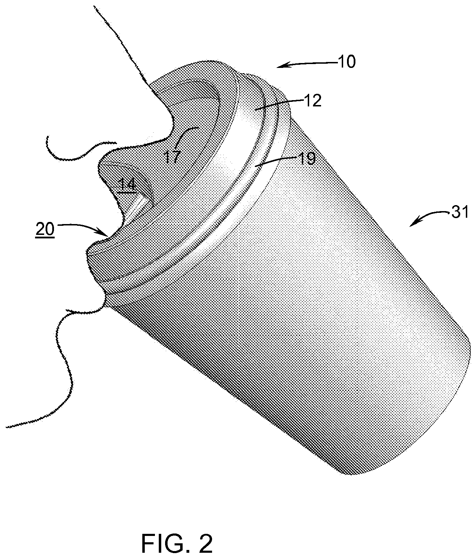

Figures 1 illustrates all of the preferred embodiments for a spill resistant disposable drink-through dome-shaped thin-walled cup lid 10. The lid 10 includes an outer top wall 11 bounded on its outer perimeter by an annular outer side wall 12 sloping downwardly and outwardly, and on its inner perimeter by an annular inner side wall 13 sloping downwardly and inwardly, with both perimeters being substantially concentric to one another. A spill cavity 14 is bounded by the annular inner side wall 13 and an arcuate interior side wall 16. The spill cavity 14 is further defined by a bottom wall 15, sloping gently upwardly and inwardly and terminating at the arcuate interior side wall 16. The arcuate interior side wall 16, which is laterally bound by the annular inner side wall 13, slopes upwardly and inwardly at a substantially steeper angle than the bottom wall 15 and terminates at an inner top wall 17. The inner top wall 17 is bound by the annular inner side wall 13 and is substantially planar. A drink-through orifice 18 is within the outer top wall 11 and aligns with the spill cavity 14. A mounting portion 19 is formed at or near the base of the annular outer side wall 12 in order to affix the lid 10 to the lip at the rim of a disposable drinking cup 31 shown in Figure 2.

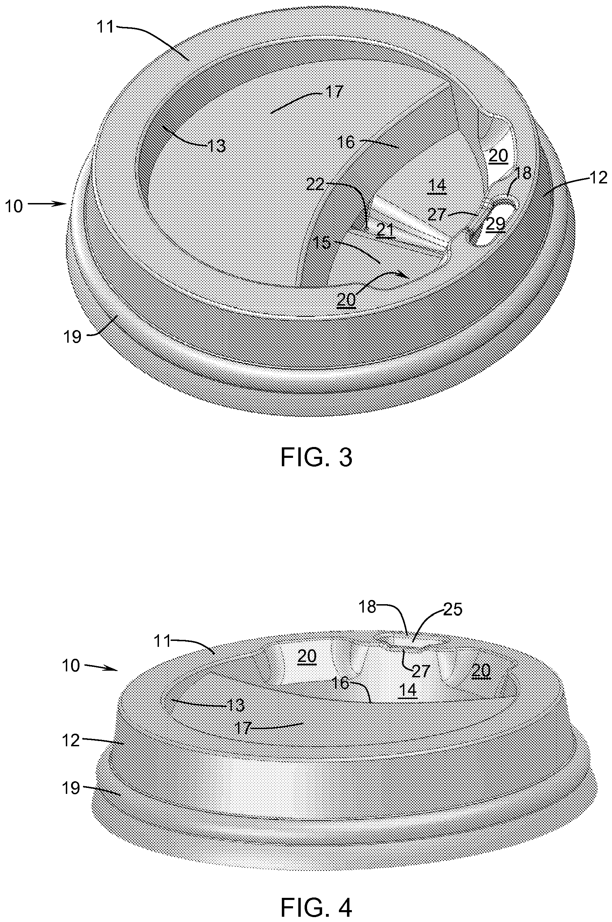

By providing a lid 10 that conforms to the anatomy of the typical user's face, the user not only experiences the lid being more comfortable but the lid 10 is less likely to cause spills while the beverage is being consumed by improving the seal between the user's mouth and the lid 10. Besides collecting spills, the spill cavity 14 accommodates the user's upper lip by deepening the annular inner side wall 13 at the drink-through orifice 18. As more clearly illustrated in Figure 2 and 3, the inner top wall 17, is recessed slightly below the outer top wall 11 at its juncture with the arcuate interior side wall 16, and slopes downwardly and away from the spill cavity 14. The user's nose is accommodated by deepening the inner top wall 17 where the user's nose is most likely to make contact with lid 10. The user's lower lip is also accommodated by having the annular outer side wall 12 raised sufficiently so the user's lower lip generally clears the mounting portion 19. The user's comfort is further enhanced by providing a pair of beveled recesses 20 that slope downwardly and inwardly within the juncture of the outer top wall 11 and the annular inner side wall 13. The beveled recesses 20 are positioned on each side of the drink-through opening 29, generally at the two locations where the user's upper lip makes contact with the edge otherwise formed by the intersection of the annular inner side wall 13 and the outer top wall 11.

On occasion, froth from the beverage - usually a whipped latte - oozes up through the drink-through orifice 18, thus providing another manner in which spills occur by froth running over the annular outer side wall 12 and down the side of the cup 31. Figure 3 illustrates a 3-dimensional drink-through orifice 18 that defines a drink-through opening 29. By recessing the drink-through opening 29 below the outer top wall 11, an interior ridge 27 is formed on the interior of side of the drink-through orifice 18 that can be recessed below the outer top wall 11, as best seen in Figure 4. Thus, any froth bubbling up through the drink-though opening 29 is directed to flow into the spill cavity 14 instead of flowing down the side of a generally vertically positioned cup 31. Any fluid that happens to flow into the spill cavity 14, if not drained back into the cup through a vent hole 22, is conveniently consumed upon the user tilting the cup 31 to take the next sip of their beverage.

The vent hole 22 is necessary for venting air into the cup 31 as the beverage is removed during consumption. The vent hole 22 is usually positioned on the outer top wall 11 or inner top wall 17 on the side opposite the drink-through orifice 18. By placing the vent hole 22 on either of the top walls 11 or 17, the vent hole 22, even though small, is exposed to potential spills from fluid dribbling out and running down the side of the cup 31. In its preferred configuration, the vent hole 22 is relocated within the spill cavity 14 as shown in Figures 1, 3 and 10. Any beverage that does happen to eject out through the vent hole 22 will be captured within the spill cavity 14. Furthermore, because the surface of a sloshing liquid within a cup remains relatively calm at its center, by repositioning the vent hole 22 near the center of the lid 10, the hole's size can be sufficiently enlarged so that the vent hole 22 also drains liquid captured in the spill cavity 14 back into the cup 31. By positioning the vent hole 22 near the center of lid 10, the likelihood of liquid coming up through even an enlarged vent hole 22 is greatly reduced when the cup 31 is either jostled or tilted for consumption. Besides being visually appealing as Figures 1 and 3 illustrate, the arcuate interior side wall 16 passes close to the lid's center while only marginally reducing the volume contained within the underside of the dome lid 10.

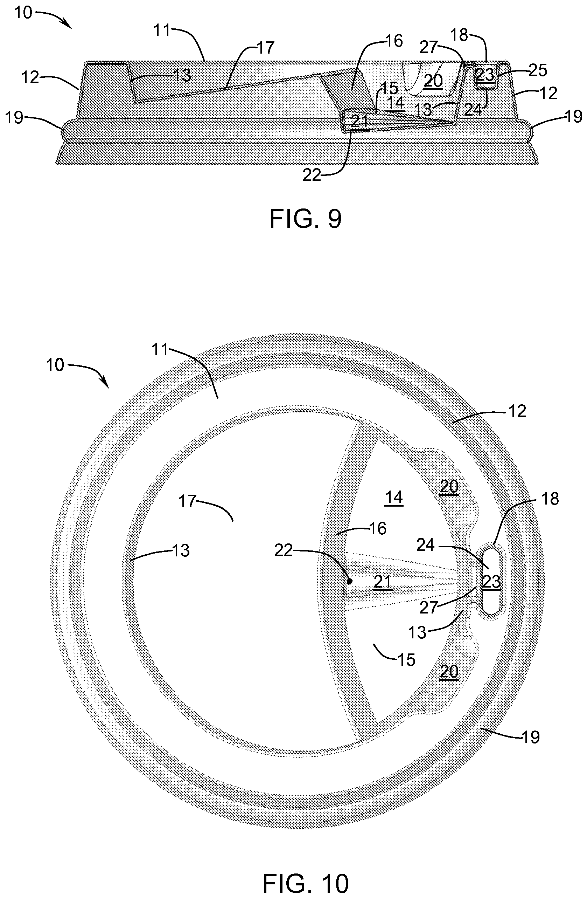

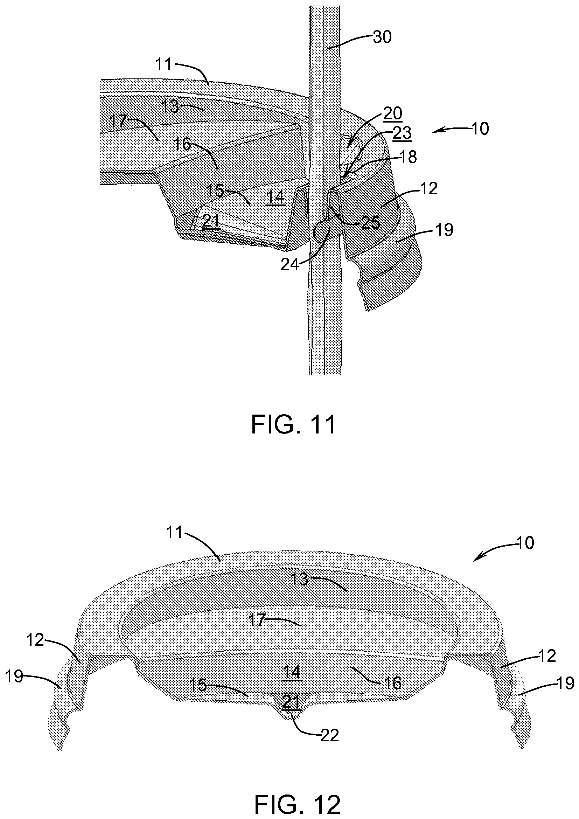

However, by placing the vent hole 22 anywhere in the bottom wall 15 within the spill cavity 14, the vent hole 22 has the potential of being inadvertently blocked by the user's upper lip thereby preventing air from venting into the cup 31 during consumption of the beverage. Figures 1, 3 and 10 illustrate a channel 21 within the bottom wall 15 of the spill cavity 14. By placing the vent hole 22 within the deepest and narrowest portion of a channel 21, the vent hole 22 is shielded from being blocked by the user's upper lip during consumption. The vent hole 22 is now able to be increased in size to also serve as a drain for the spill cavity 14. In its preferred configuration, the channel 21 is radially aligned with the arcuate interior side wall 16 and centered with the drink-through orifice 18, as shown in Figure 10. Figures 9 and 12 illustrate how the channel 21 can be formed sufficiently deep and narrow at the location of the vent hole 22 to prevent the user's upper lip from contacting the bottom of the channel 21, thereby blocking the vent hole 22.

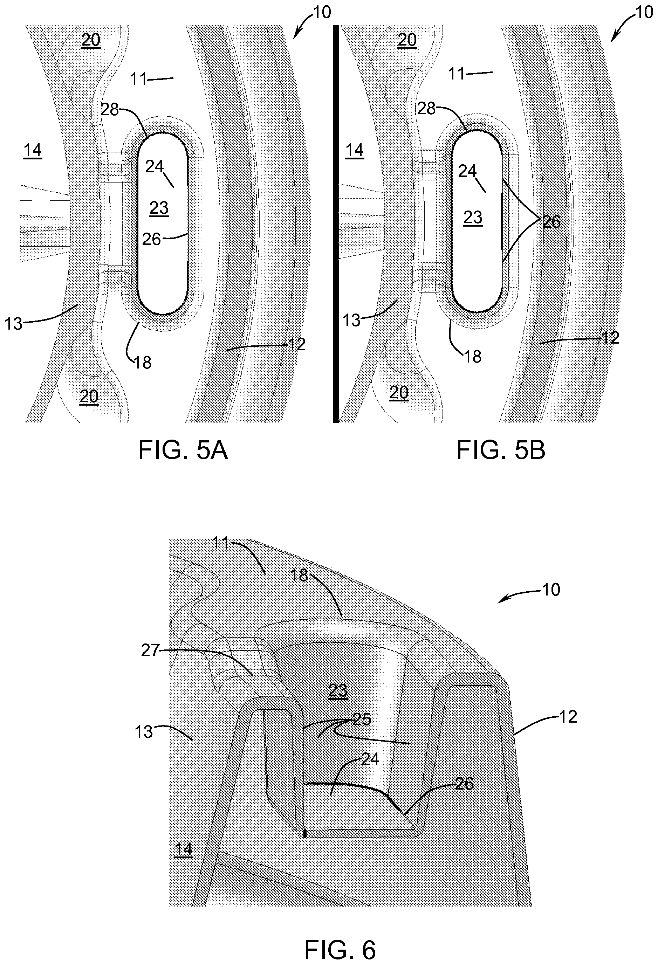

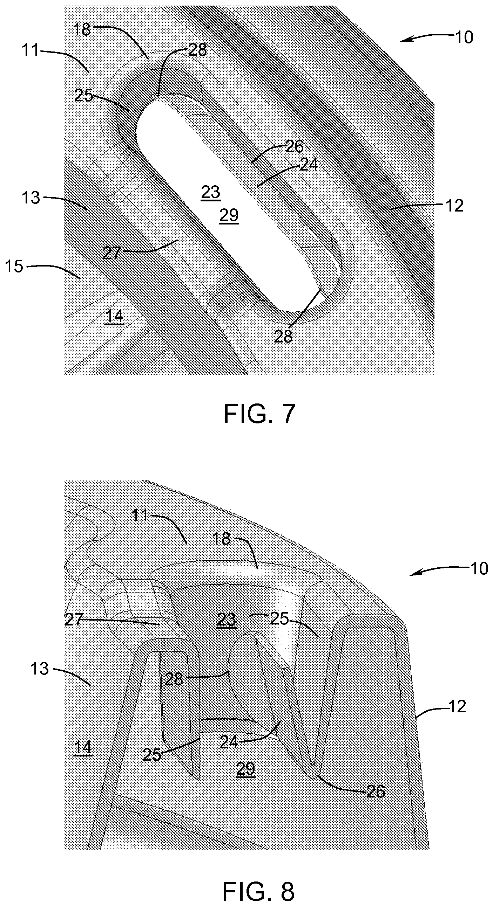

As illustrated in Figures 5A-5B and 6, an orifice side wall 25 extends downwardly and inwardly from a perimeter of the drink-though orifice 18 and encloses on itself to form a chamber 23. In the preferred configuration, the perimeter of the drink-through orifice 18 is defined by a pair of parallel linear edges connected by a pair of opposing semi-circular edges. Thus, the orifice side wall 25 forms a pair of opposing planar surfaces connected by a pair of opposing arcuate surfaces. The base of the chamber 23 is directly below and aligned with the drink-through orifice 18 as best seen in top views Figures 5A-5B and 10. A flap or flaps 24 is formed by cutting into the base of the chamber 23, which in its preferred configuration is generally planar and horizontal. When the flap 24 is in its relaxed position, as most clearly shown in Figures 5A-5B and 6, the drink-through orifice 18 is closed off thereby restricting sloshed liquid from exiting. When the flap 24 is in its non-relaxed position, as shown in Figures 7 and 8, the resulting drink-through opening 29 permits the beverage to flow through the drink-though orifice 18.

The drink-through orifice 18 remains visually integrated within the dome cup lid 10 by preserving the curvature of the outer and inner side walls 12 and 13, and by preserving the height of the outer top wall 11 surrounding the drink-through orifice 18. By recessing the flap 24 below the drink-through orifice 18 in the chamber 23, the flap 24 along with its functioning, is essentially hidden from view of the casual observer. The flap 24 is created by stamping a cut line into the base of the chamber 23 using die cutting methods adaptable to the industry. The flap 24 preferably follows the contour of the base of the orifice side wall 25 in order to maximize its size and resulting flow of beverage. The flap 24 is formed by cutting only partially around the perimeter with the uncut portion becoming a hinge portion 26, referred to as a "living hinge", and is preferably along one of the two linear edges within the base of the chamber 23. Figures 5A and 5B illustrate two possible configurations for the living hinge 26. Incidentally, the permanent drink-through opening 29 shown in Figure 3, is created by cutting around the entire perimeter of the orifice side wall 25, thus eliminating the flap 24 embodiment.

The thermo-plastic material commonly used to form disposable cup lids is sufficiently flexible to provide a living hinge that bends, yet is sufficiently rigid to resist bending. Thus a force must be applied to the flap 24 in order for the living hinge 26 to bend thereby exposing the drink-though opening 29 as shown in Figures 7 and 8. When molding thermo-formed plastic sheets, the thickness of the material varies from one segment of the part to the next, tending to thin while forming into the downward extensions. In the present disclosure, one of the thinnest segments of lid 10 is located at the base of the chamber 23. Because the material is inherently more flexible where thinner, by positioning the flap 24 at the base of the chamber 23, the living hinge 26 can be made to fold inward when the user takes a sip of the beverage. The force required for the flap 24 to open can be adjusted by reducing or increasing the depth of the chamber 23, thereby adjusting the thickness of both the flap 24 and the living hinge 26. Additionally, by using a more sophisticated manufacturing technique, the thickness of the flap 24 and the living hinge 26 can be controlled by applying varying pressures to different segments of the material during thermo-forming. Furthermore, the resistance of the living hinge 26 to folding can be adjusted by increasing or decreasing the length of the living hinge 26 as can be visualized in Figures 5A and 5B. It should be noted that the sectional views shown herein fail to accurately reflect the thinning effect of molded thermo-formed plastics.

Figures 7 and 8 show the preferred flap 24 folded into an open position, as it would be if a beverage were flowing through the drink-through opening 29. When flap 24 opens, the flap corners 28 curl against the orifice side wall 25 as shown. With the coupled spring action of the folding living hinge 26 and the curling flap corners 28 exerting force to return to their relaxed state, the flap 24 effectively closes during periods when the beverage is not being consumed. The living hinge 26 is preferably located along one of the two linear edges at the base of the orifice side wall 25. By placing the living hinge 26 at the base of outer planar wall portion of the orifice side wall 25, as shown in Figures 5A and 5B, the flap 24 opens from inward to outward, as best seen in Figures 7 & 8. Thus, a violently agitated beverage ejecting through the drink-through orifice 18, is redirected by the inwardly angled non-relaxed flap 24 into the spill cavity 14.

Preferably, the flap 24 in the base of the chamber 23 is capable of opening when subjected to a negative air pressure generated by a user through the drink-through orifice 18 to allow liquid to pass through the chamber 23 and the drink-through orifice 18. Otherwise, the flap 24 remains in a closed position to restrict the flow of liquid through the chamber 23 and the drink-through orifice 18.

There are occasions when a user wants to insert a drinking straw 30 through the chamber 23 and into the cup 31, as illustrated in Figure 11. When the straw 30 is inserted into the chamber 23, the flap 24 yields by folding downward as shown, thereby permitting the straw 30 to become fully inserted into the cup 31. Not only does the flap 24 fold out of the way, the orifice side wall 25 provides additional support by enveloping the straw 30 within the chamber 23. The insertion of the drinking straw 30 is likely to distort the living hinge 26 such that the functionality of the flap 24 is destroyed. However, when a user inserts the drinking straw 30, it usually is not removed until the beverage is consumed and the container is discarded.

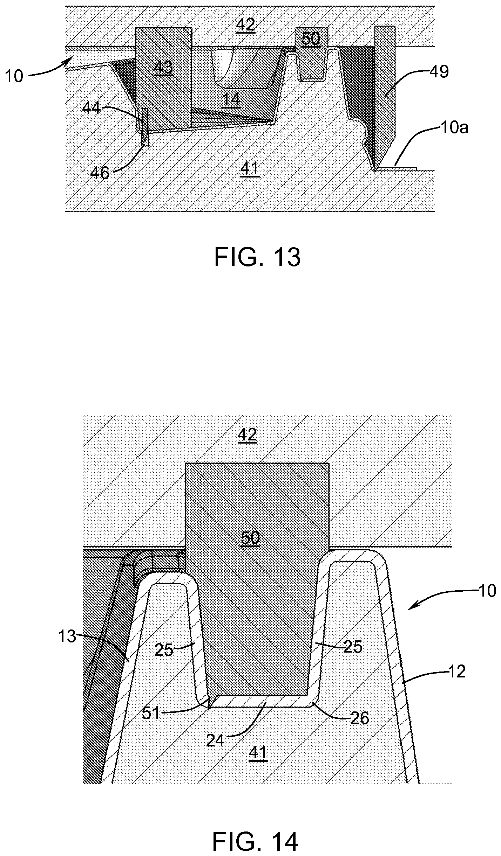

Stamping of drink-through openings is a common secondary process subsequent to vacuum-formation of the thermoplastic material. As shown in Figure 13, the stamping process typically consists of an array of hardened metallic cutting tools impacting upon a mating metallic receiving surface with the thermoplastic material being supported by the receiving surface during the cutting process. In standard manufacturing of disposable dome lids, all cuts are performed simultaneously even though they are often on different horizontal planes. The cuts typically include the cutting or punching of the drink hole, the punching of vent and drain holes, and the cutting out of the lid itself from the thermoplastic material.

The present disclosure introduces a method for die cutting the flap 24 within the base of chamber 23 that is preferably both primarily horizontal and planar, as most clearly viewed in Figures 6 and 9. Figure 13 not only illustrates a method for die cutting the flap 24, but also illustrates how the vent hole 22, the flap 24, and the lid 10 can all be cut simultaneously with a singular cutting stroke. A support plate 41 is typically shaped similar to the vacuum-formed lid 10. In production, the support plate 41 often serves as the mold used to form the thermoplastic material and a receiving surface to cut the thermoplastic material, thereby combining the vacuum forming process with the cutting operation. This manufacturing technique saves time and cost by eliminating the need for transferring the molded sheets from one station to the next. A die mounting plate 42 aligns with the support plate 41 and holds all the cutting tools: a vent block die 43 with a needle punch 44 for cutting a small vent hole; a chamber block die 50 with a cutting blade 51 for cutting in the flap 24 or the drink-through opening 29; and a ring die 49 for cutting the lid 10 away from the remainder of the thermoplastic sheet 10a. When the support plate 41 holding the untrimmed cup lid 10 comes into contact with the cutting tools held by the die mounting plate 42, as seen in Figure 13, the vent hole 22 and the flap 24 are cut and the lid 10 is separated from the remainder of the thermoplastic sheet 10a. A receiving socket 46 within the support plate 41 allows the needle punch 44 to penetrate completely through the lid 10 for cutting the vent hole 22.

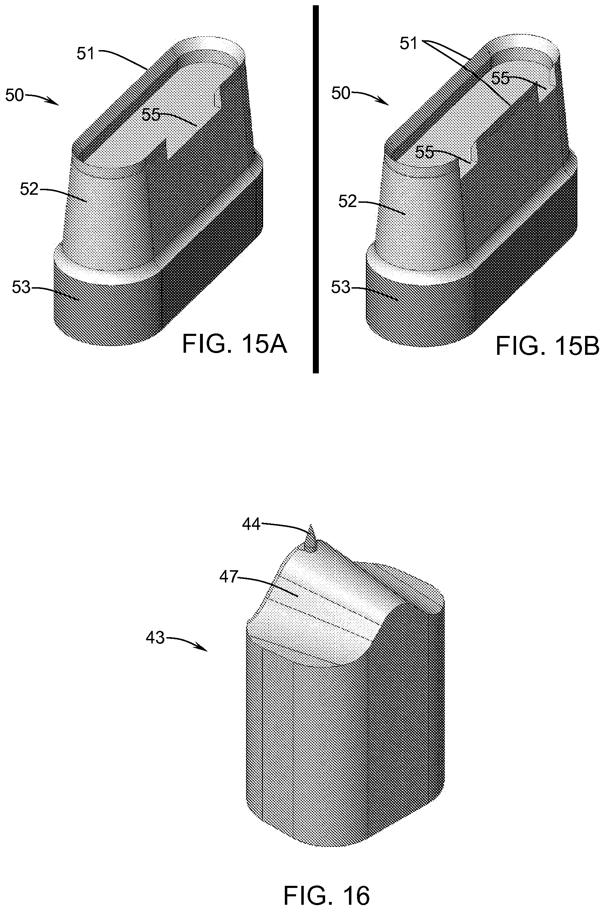

Figures 14 and 15A-15B illustrate more clearly the die cutting blade 51 of the chamber block die 50 for cutting in the flap 24. Figures 15A and 15B show alternative cutting blades 51 for cutting the two preferred configurations for the living hinge 26, shown in Figures 5A and 5B respectively. Unlike the cutting of drink holes, no waste is generated by cutting in the flap 24, thus eliminating the cost associated with keeping the support plate 41 clear of waste build-up. Of particular interest are Figures 15A-15B and 16, where it can be seen that the block dies 43 and 50 have contoured portions 47 and 52 respectively. The contoured portions 47 and 52 conform to the contours of the lid 10. During the cutting process the chamber block die 50 inserts into the chamber 23 where the contoured portion 52 essentially mates with the contour of chamber 23. Likewise, the vent block die 43 inserts into channel 21 where the contoured portion 47 essentially mates with the contour of the channel 21. The contoured portions 47 and 52 enable the cutting portions, the needle punch 44 and the cutting blade 51, to be relatively short thereby increasing their strength and durability.

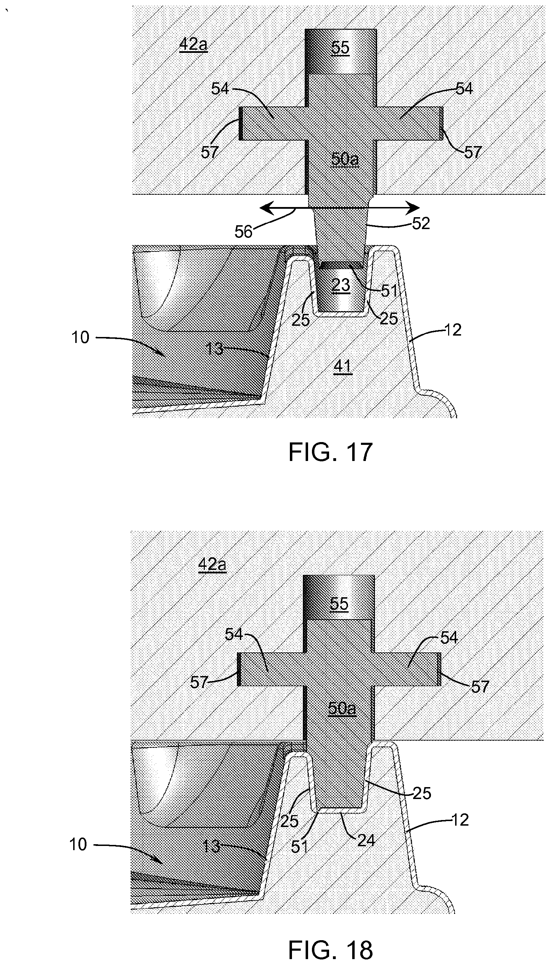

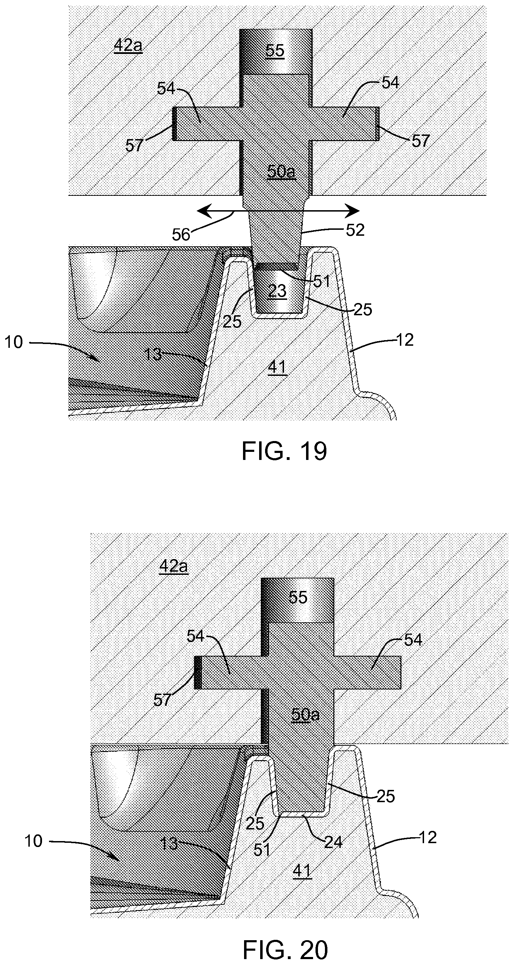

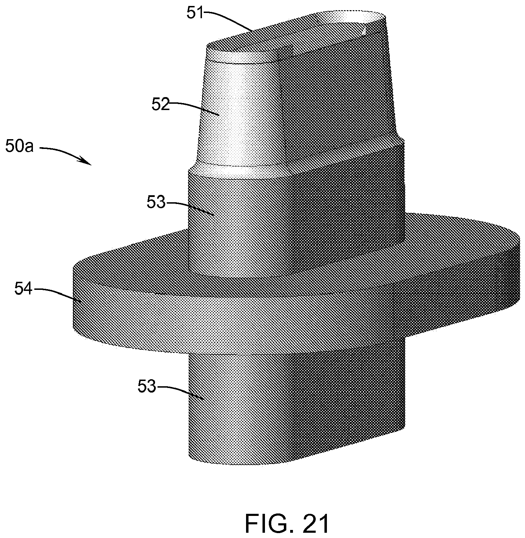

The manufacturing of a typical disposable dome lid does not require precision positioning for cutting drink and vent holes, including the cutting out of the lid. Usually, lids are designed to permit a loose tolerance by providing sufficient area surrounding all required cut features. However, the cutting of flap 24 within chamber 23 requires a precise alignment between the chamber block die 50 and the support plate 41, if the flap 24 is to be cut along the base of the orifice side wall 25 as shown in Figures 5 and 6. The likelihood of tooling misalignment becomes an issue when a large number of lids are simultaneously die-cut from a single sheet during production. Figures 17 and 18 illustrate a floating block die 50a similar to the chamber block die 50 except having a flange member 54 that is horizontal and surrounds a block die body 53, best viewed in Figure 21. The mounting plate 42a includes a die chamber 55 for holding the floating block die 50a. The die chamber 55 is further defined by a radial slot 57 that is also horizontal and surrounds the die chamber 55. The floating block die 50a is supported within the die chamber 55 by the flange member 54 which inserts into the radial slot 57. The floating block die 50a is capable of lateral movement 56 because of space provided between vertical surfaces within the die chamber 55. The floating block die 50a is restricted from vertical movement within die chamber 55 because of the restricted clearance between horizontal contacting surfaces within radial slot 57. If the floating block die 50a is aligned with the chamber 23, as shown in Figure 17, there will be no lateral movement 56 during the cutting process as shown in Figure 18. However, if a minor misalignment exists between the floating block die 50a and the chamber 23, the contoured portion 52 of the floating block die 50a contacts the orifice side wall 25 prior to die cutting, as shown in Figure 19. As the floating block die 50a continues its insertion into the chamber 23, the downwardly and inwardly sloping orifice side wall 25 exerts a lateral force to the floating block die 50a thereby causing the floating block die 50a to move laterally into the proper alignment for cutting, as shown in Figure 20.

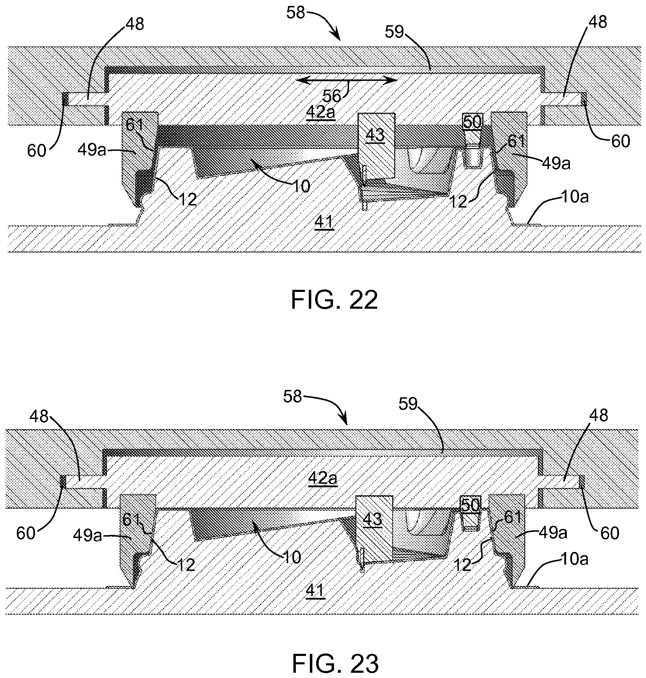

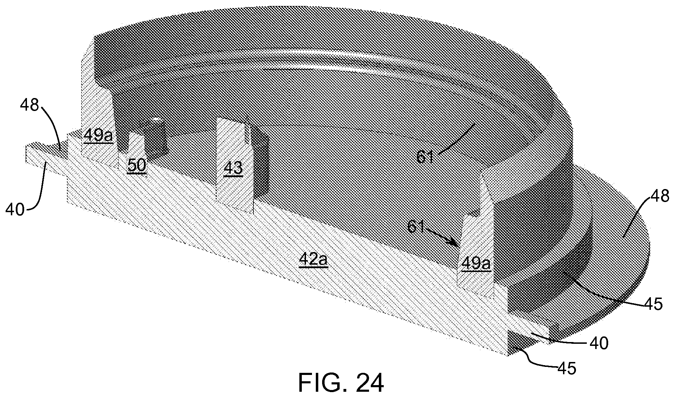

Another method for self-aligning cutting dies with the thermo-formed disposable dome cup lid 10, introduces a separate floating mounting plate 42a for each cup lid 10, as shown in Figures 22 and 23. A mounting plate base 58 holds an array of similar floating mounting plates 42a that align with the support plate 41. The floating mounting plate 42a includes a mounting plate flange 48 that is horizontal and surrounds the mounting plate side wall 45, best viewed in Figure 24. A contoured ring die 49a is mounted to the floating mounting plate 42a for separating the lid 10 from the remainder of the thermoplastic material 10a. In a preferred configuration the floating mounting plate 42a also contains all cutting tools for cutting each cup lid 10 including the chamber block die 50 and the vent block die 43. An annular contoured portion 61 of the contoured ring die 49a aligns with the annular outer side wall 12 of the just-formed cup lid 10. The floating mounting plate 42a is mounted within a mounting plate chamber 59 in the mounting plate base 58. The mounting plate chamber 59 is further defined by a radial chamber slot 60. The floating mounting plate 42a is supported within the mounting plate chamber 59 by the mounting plate flange 48 which inserts into the radial chamber slot 60. The floating mounting plate 42a is capable of lateral movement 56 because of space provided between vertical surfaces within the mounting plate chamber 59. The floating mounting plate 42a is restricted from vertical movement within mounting plate chamber 59 because of the restricted clearance between horizontal contacting surfaces within the radial chamber slot 60. The floating mounting plate 42a is restricted from rotational movement within the mounting plate base 58 by one or more flange tabs 40 shown in Figure 24. Rotational alignment is required if the floating mounting plate 42a includes cutting tools within the interior of the contoured ring die 49a. If the floating mounting plate 42a is aligned with the lid 10, as shown in Figure 22, there will be no lateral movement 56 during the cutting process as shown in Figure 22. However, if a minor misalignment exists between the floating mounting plate 42a and the cup lid 10, the annular contoured portion 61 of the annular ring die 49a contacts the annular outer side wall 12 of the formed cup lid 10 prior to die cutting. As the cup lid 10 inserts into the misaligned contoured ring die 49a, the mating of the annular outer side wall 12 with the annular contoured portion 61 results a lateral force being applied to the floating mounting block 42a thereby causing the floating mounting plate 42a to move laterally 56 into the proper alignment for all cuts including separating the cup lid 10 from the remainder of the thermoplastic sheet 10a, as shown in Figure 23.

These described methods are particularly useful for making cuts within deeper cavities that require a precision tolerance. By implementing one or more of the described methods, the precise alignment for cutting into the contours of the formed thermoplastic sheet can be achieved by the self-guided motion of the cutting tools. When deviations measured tenths of a millimeter are a concern, maintaining proper alignment becomes an issue in production where a large array of cutting tools are simultaneously cutting a multitude of disposable cup lids.

The various embodiments described above can be combined to provide further embodiments. Aspects of the embodiments can be modified, if necessary to employ concepts of the various patents, applications and publications to provide yet further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A lid (10) that mounts on a cup (31) for a beverage, the lid (10) occupying a volume above the top of the cup (31), the lid (10) comprising:
opposing exterior and interior surfaces;
a mounting portion (19) capable of anchoring on the cup (31);
an outer side wall (12) extending upwardly and sloping away and radially inwardly from the mounting portion (19) and terminating at a top (11);
an inner side wall (13) extending downwardly from the top (11) and sloping away from the outer side wall;
the inner and outer side walls (13 & 12) and the top (11) combining to define an annular ridge (11, 12 & 13);
an inner top wall (17) below the top (11) and at least partially bounded by the inner side wall (13);
a drink-through orifice (18) in the ridge (11, 12 & 13), that enables drinking from the cup (31) without removal of the lid (10), the ridge (11, 12 & 13) enabling lower and upper lips of a user to encompass the drink-through orifice (18) with the lower lip of the user engaging with the outer side wall (12) and the upper lip of the user engaging with the inner side wall (13) during consumption of the beverage;
an interior ridge (27) defined by the inner side wall (13) and a portion of the top (11) that includes the drink-through orifice (18);
a first segment of the drink-through orifice (18) occupying the interior ridge (27);
a second segment of the drink-through orifice (18) defining the remainder of the drink-through orifice (18); **characterized in that**
the first segment is recessed below the second segment thereby directing the beverage having a frothed portion bubbling up through the drink-through orifice (18), to flow over the interior ridge (27) and onto the inner side wall (13) with the cup (31) in a predominantly upright position.

2. The lid (10) of claim 1, the lid (10) further comprising:
a drink-through chamber (23) within the ridge (11, 12 & 13), the drink-through chamber (23) having an open top and a circumscribing orifice side wall (25) extending downwardly from a perimeter of the drink-through orifice (18) and terminating at a bottom; and
a drink-through opening (29) in the bottom of the drink-through chamber (23).

3. The lid (10) of claim 1, the lid (10) further defined by:
a drink-through chamber (23) within the ridge (11, 12 & 13), the drink-through chamber (23) having an open top and a circumscribing orifice side wall (25) extending downwardly from a perimeter of the drink-through orifice (18) and terminating at a bottom;
a flap (24) in the bottom of the drink-through chamber (23), the flap (24) having a relaxed position and a non-relaxed position; and
the flap (24) including a hinge portion (26), the hinge portion (26) connecting the flap (24) to the drink-through chamber (23) and enabling the flap (24) to fold into the non-relaxed position when subjected to a negative air pressure applied to the drink-through orifice (18) generated by the user during consumption of the beverage, thereby providing a drink-through opening (29) and allowing the beverage to pass through the drink-through orifice (18) with the cup (31) in a tilted position, and to otherwise remain in the relaxed position thereby restricting the exiting of the beverage through the drink-through orifice (18) when the beverage sloshes with the cup (31) in a predominantly upright position.

4. The lid (10) of claims 1, 2 or 3, the lid (10) further comprising:
an interior side wall (16) extending downwardly from the inner top wall (17) and laterally bounded by the inner side wall (13);
a spill cavity (14) defined by the inner side wall (13) and the interior side wall (16), the spill cavity (14) configured to enable the upper lip of the user to engage with a portion of the inner side wall (13) within the spill cavity (14) during consumption of the beverage; and
the spill cavity (14) configured to collect the beverage flowing over the interior ridge (27) and onto the inner side wall (13) with the cup (31) in a predominantly upright position.

5. The lid (10) of claim 4, wherein:
the spill cavity (14) is further defined by the interior side wall (16) having an arcuate curvature, the arcuate curvature curving away from the drink-through orifice (18), thereby providing additional space for the upper lip of the user; and
the lid (10) having a center and the arcuate interior side wall (16) having a center, the center of the arcuate interior side wall (16) passing near the center of the lid (10);
a vent hole (22) adjacent to the center of the arcuate interior side wall (16), the vent hole (22) in fluid communication with the spill cavity (14) and configured to vent air into the cup (31) during consumption of the beverage.

6. The lid (10) of claims 1, 2, 3, 4, or 5, wherein the inner top wall (17) is further defined by a primarily planar wall portion sloping downwardly away from the drink-through orifice (18) to include a lower area of the inner top wall (17), the primarily planar wall portion configured to provide additional room for the user's nose during consumption of the beverage.

7. The lid (10) of claims 1, 2, 3, 4, 5 or 6, wherein the ridge (11, 12 & 13) includes a pair of beveled recesses (20) within a portion of the inner side wall (13) and the top (11), each of the beveled recesses (20) positioned on a respective side of the drink-through orifice (18) and configured to engage with the upper lip of the user during consumption of the beverage.

8. A method of forming and cutting the lid (10) of claim 2 or claim 3 for a beverage cup (31) from an unformed thermoplastic sheet, a material that becomes pliable above a specific temperature and retains a molded shape upon cooling, said lid (10) including the features of claim 3, said method comprising:
providing a support plate (41) that is shaped in the form of said lid (10) and is configured to serve as a mold to vacuum-form the unformed thermoplastic sheet, the support plate (41) further configured to provide multiple receiving surfaces for die cutting;
forming the unformed thermoplastic sheet onto the support plate (41) into a lid-shaped material, the lid-shaped material including the drink-through chamber (23) with the orifice side wall (25);
providing a mounting plate (42) that includes a block die (50), the block die (50) having an outwardly facing and inwardly sloping contoured portion (52) and a cutting portion (51) for cutting into the drink-through chamber (23);
providing an orifice side wall (25) with an inwardly facing and inwardly sloping contour, the contoured portion (52) of the block die (50) aligning with the contour of the orifice side wall (25) prior to the block die (50) cutting into the bottom of the drink-through chamber (23).

9. The method of claim 8 further comprising:
providing a mounting plate (42a) that includes a block die chamber (55), the block die chamber (55) having a laterally and radially positioned mounting slot (57);
providing the block die (50a) that is floating within the block die chamber (55), and includes a laterally and radially positioned flange member (54), the flange member (54) positioned within the mounting slot (57) such that the flange member (54) permits the block die (50a) to move laterally in a first direction (56) with respect to the mounting plate (42a) and prevents the block die (50a) from moving in a second direction that is transverse with respect to the first direction; and
guiding the block die (50a) into alignment with the drink-through chamber (23) and in position for cutting into the bottom of the drink-through chamber (23) by the contoured portion of the block die (50a) contacting the contour of the orifice side wall (25) when the mounting plate (42a) moves towards the support plate (41) for die cutting, thereby causing the block die (50a) to move in the first direction (52) prior to cutting into the bottom of the drink-through chamber (23).

10. The method of claims 8 or 9 further comprising:
providing a mounting plate base (58) that includes a mounting plate chamber (59), the mounting plate chamber (59) having a laterally and radially positioned mounting slot (60);
providing the mounting plate (42 & 42a) that is floating within the mounting plate chamber (59), and includes a laterally and radially positioned flange member (48), the flange member (48) positioned within the mounting slot (60) such that the flange member (48) permits the mounting plate (42 & 42a) to move laterally in a first direction (56) with respect to the mounting plate base (58) and prevent the mounting plate (42 & 42a) from moving in a second direction that is transverse with respect to the first direction;
the mounting plate (42 & 42a) including a ring die (49a) having an inwardly facing and inwardly sloping contoured portion (61), the outer side wall (12) of the lid-shaped material having an outwardly facing and inwardly sloping contour; and
guiding the mounting plate (42 & 42a) into alignment with the lid-shaped material for die cutting by the contoured portion (61) of the ring die (49a) contacting the contour of the outer side wall (12) when the mounting plate (42 & 42a) moves towards the support plate (41) for die cutting the lid-shaped material, thereby causing the mounting plate (42a) to move in the first direction prior to cutting into the bottom of the drink-through chamber (23).

11. The method of claims 8 or 9, wherein cutting the lid-shaped material with the block die (50 & 50a) comprises cutting into the bottom of the drink-through chamber (23) to provide the flap (24).

12. The method of claims 9 or 10, wherein cutting the lid-shaped material with the block die (50 & 50a) comprises cutting into the bottom of the drink-through chamber (23) to provide the drink-through opening (29).

13. The method of claims 8 or 9, wherein the mounting plate (42 & 42a) includes a needle punch (44) and a ring die (49), and the method further comprises:
the needle punch (44) for cutting the vent hole (22) in the lid-shaped material at a separate location from the drink-through chamber (23); and
the ring die (49) for cutting said lid (10) from the surrounding thermoplastic material (10a).

14. The method of claim 10, wherein the mounting plate (42) includes a needle punch (44), and the method further comprises:
the needle punch (44) for cutting a vent hole (22) in the lid-shaped material at a separate location from the drink-through chamber (23), and
the ring die (49) for cutting said lid (10) from the surrounding thermoplastic material.

15. The method of claims 10 or 14, wherein the mounting plate (42) is restricted from rotational movement within the mounting plate (42) base by one or more flange tabs (40) included within the flange member (48).

## Patentansprüche

1. Ein Deckel (10), der sich auf einen Becher (31) für ein Getränk montieren lässt, welcher Deckel (10) ein Volumen über dem oberen Ende des Bechers (31) einnimmt, welcher Deckel (10) aufweist:
entgegengesetzte äußere und innere Flächen,
einen Montageabschnitt (19), der in der Lage ist, sich auf dem Becher (31) zu verankern;
eine Außenseitenwand (12), die sich nach oben und wegneigend und radial nach innen von dem Montageabschnitt (19) erstreckt und an einem oberen Ende (11) endet;
eine Innenseitenwand (13), die sich von dem oberen Ende (11) nach unten und wegneigend von der Außenseitenwand erstreckt;
wobei die Innen- und Außenseitenwände (13 & 12) und das obere Ende (11) sich zusammensetzen, um eine ringförmige Erhöhung (11, 12 & 13) zu definieren;
eine Innenoberwand (17) unterhalb des oberen Endes (11) und zumindest teilweise von der Innenseitenwand (13) begrenzt;
eine Mündung (18) zum dadurch Trinken in der Erhöhung (11, 12 & 13), die ein Trinken aus dem Becher (31) ohne Entfernen des Deckels (10) ermöglicht, wobei die Erhöhung (11, 12 & 13) es unteren und oberen Lippen eines Benutzer ermöglicht, die Mündung (18) zum dadurch Trinken zu umschließen, wobei während des Konsums des Getränks die untere Lippe des Benutzers mit der Außenseitenwand (12) eingreift und die obere Lippe des Benutzers mit der Innenseitenwand (13) eingreift;
eine innere Erhöhung (27), die von der Innenseitenwand (13) und einem Abschnitt des oberen Endes (11), welcher die Mündung (18) zum dadurch Trinken umfasst, definiert wird;
wobei ein erstes Segment der Mündung (18) zum dadurch Trinken die innere Erhöhung (27) einnimmt;
wobei ein zweites Segment der Mündung (18) zum dadurch Trinken den Rest der Mündung (18) zum dadurch Trinken definiert;
**dadurch gekennzeichnet, dass**
das erste Segment unterhalb des zweiten Segments vertieft ist und somit das Getränk, das einen Schaumanteil hat, der durch die Mündung (18) zum dadurch Trinken hoch sprudelt, leitet, um über die innere Erhöhung (27) und auf die Innenseitenwand (13) zu fließen, wenn der Becher (31) in einer vorwiegend aufrechten Position ist.

2. Der Deckel (10) nach Anspruch 1, welcher Deckel (10) ferner aufweist:
Eine Kammer (23) zum dadurch Trinken innerhalb der Erhöhung (11, 12 & 13), welche Kammer (23) zum dadurch Trinken ein offenes oberes Ende und eine abgrenzende Mündungsseitenwand (25), die sich von einem Umfang der Mündung (18) zum dadurch Trinken nach unten erstreckt und an einem Boden endet, hat, und
eine Öffnung (29) zum dadurch Trinken in dem Boden der Kammer (23) zum dadurch Trinken.

3. Der Deckel (10) nach Anspruch 1, welcher Deckel (10) ferner definiert ist durch:
Eine Kammer (23) zum dadurch Trinken innerhalb der Erhöhung (11, 12 & 13), welche Kammer (23) zum dadurch Trinken ein offenes oberes Ende und eine abgrenzende Mündungsseitenwand (25), die sich von einem Umfang der Mündung (18) zum dadurch Trinken nach unten erstreckt und an einem Boden endet, hat;
eine Klappe (24) in dem Boden der Kammer (23) zum dadurch Trinken, welche Klappe (24) eine entspannte Position und eine nicht entspannte Position hat; und
wobei die Klappe (24) einen Gelenkabschnitt (26) umfasst, welcher Gelenkabschnitt (26) die Klappe (24) mit der Kammer (23) zum dadurch Trinken verbindet und es der Klappe (24) ermöglicht, sich in die nicht entspannte Position hinein zu falten, wenn sie einem negativen auf die Mündung (18) zum dadurch Trinken aufgebrachten Luftdruck ausgesetzt wird, der während des Konsums des Getränks von dem Benutzer generiert wird, und somit eine Öffnung (29) zum dadurch Trinken bereitstellt und es dem Getränk erlaubt, durch die Mündung (18) zum dadurch Trinken zu gelangen, wenn der Becher (31) in einer schrägen Position ist, und andernfalls in der entspannten Position zu verbleiben, und somit das Austreten des Getränks durch die Mündung (18) zum dadurch Trinken zu sperren, wenn das Getränk schwappt und der Becher (31) in einer vorwiegend aufrechten Position ist.

4. Der Deckel (10) nach Anspruch 1, 2 oder 3 welcher Deckel (10) ferner aufweist:
Eine innere Seitenwand (16), die sich von der Innenoberwand (17) nach unten erstreckt und lateral von der Innenseitenwand (13) begrenzt wird;
einen von der Innenseitenwand (13) und der inneren Seitenwand (16) definierten Schütthohlraum (14), welcher Schütthohlraum (14) eingerichtet ist, um es der oberen Lippe eines Benutzers zu ermöglichen, während des Konsums des Getränks mit einem Abschnitt der Innenseitenwand (13) innerhalb des Schütthohlraums (14) einzugreifen; und
wobei der Schütthohlraum (14) eingerichtet ist, um das Getränk zu sammeln, das über die innere Erhöhung (27) und auf die Innenseitenwand (13) fließt, wenn der Becher (31) in einer vorwiegend aufrechten Position ist.

5. Der Deckel (10) nach Anspruch 4, wobei:
der Schütthohlraum (14) ferner von der inneren Seitenwand (16) definiert wird, die eine bogenförmige Krümmung hat, welche bogenförmige Krümmung sich weg von der Mündung (18) zum dadurch Trinken krümmt, und somit zusätzlichen Raum für die obere Lippe des Benutzers bereitstellt; und
der Deckel (10) eine Mitte hat und die bogenförmige innere Seitenwand (16) eine Mitte hat, wobei die Mitte der bogenförmigen inneren Seitenwand (16) nahe der Mitte des Deckels (10) verläuft;
ein Lüftungsloch (22) benachbart zu der Mitte der bogenförmigen inneren Seitenwand (16), welches Lüftungsloch (22) in Strömungsverbindung mit dem Schütthohlraum (14) steht und eingerichtet ist, um während des Konsums des Getränks Luft in den Becher (31) hinein zu lassen.

6. Der Deckel (10) nach Anspruch 1, 2, 3, 4 oder 5, wobei die Innenoberwand (17) ferner von einem primär ebenen Wandabschnitt definiert wird, der sich nach unten von der Mündung (18) zum dadurch Trinken wegneigt, um einen unteren Bereich der Innenoberwand (17) zu umfassen, welcher primär ebene Wandabschnitt eingerichtet ist, um während des Konsums des Getränks zusätzlichen Raum für die Nase des Benutzers bereitzustellen.

7. Der Deckel (10) nach Anspruch 1, 2, 3, 4, 5 oder 6, wobei die Erhöhung (11, 12 & 13) ein Paar von angeschrägten Vertiefungen (20) innerhalb eines Abschnitts der Innenseitenwand (13) und des oberen Endes (11) umfasst, wobei jede der angeschrägten Vertiefungen (20) auf einer jeweiligen Seite der Mündung (18) zum dadurch Trinken positioniert und eingerichtet ist, um während des Konsums des Getränks mit der oberen Lippe des Benutzers einzugreifen.

8. Ein Verfahren zum Formen und Schneiden des Deckels (10) nach Anspruch 2 oder Anspruch 3 für einen Getränkebecher (31) aus einer ungeformten thermoplastischen Platte, einem Material, das oberhalb einer spezifischen Temperatur nachgiebig wird und nach dem Abkühlen eine geformte Gestalt behält, welcher Deckel (10) die Merkmale des Anspruchs 3 umfasst, welches Verfahren aufweist:
Bereitstellen einer Trageplatte (41), die in der Form des genannten Deckels (10) gestaltet ist und eingerichtet ist, um als eine Form zum Vakuumformen der ungeformten thermoplastischen Platte zu dienen, welche Trageplatte (41) ferner eingerichtet ist, um mehrere Aufnahmeflächen zum Formschneiden bereitzustellen;
Formen der ungeformten thermoplastischen Platte auf die Trageplatte (41) in ein Material in Deckelgestalt, welches Material in Deckelgestalt die Kammer (23) zum dadurch Trinken mit der Mündungsseitenwand (25) umfasst;
Bereitstellen einer Montageplatte (42), die einen Formblock (50) umfasst, welcher Formblock (50) einen nach außen zeigenden und nach innen geneigten Konturenabschnitt (52) und einen Schneideabschnitt (51) zum Schneiden in die Kammer (23) zum dadurch Trinken hat;
Bereitstellen einer Mündungsseitenwand (25) mit einer nach innen zeigenden und nach innen geneigten Kontur, wobei der Konturenabschnitt (52) des Formblocks (50) mit der Kontur der Mündungsseitenwand (25) ausgerichtet ist, bevor der Formblock (50) in den Boden der Kammer (23) zum dadurch Trinken hinein schneidet.

9. Das Verfahren nach Anspruch 8, ferner aufweisend:
Bereitstellen einer Montageplatte (42a), die eine Formblockkammer (55) umfasst, welche Formblockkammer (55) einen seitlich und radial positionierten Montageschlitz (57) hat;
Bereitstellen des Formblocks (50a), der innerhalb der Formblockkammer (55) schwimmt und ein seitlich und radial positioniertes Flanschglied (54) umfasst, welches Flanschglied (54) derart innerhalb des Montageschlitzes (57) positioniert ist, dass das Flanschglied (54) es dem Formblock (50a) gestattet, sich seitlich in eine erste Richtung (56) bezüglich der Montageplatte (42a) zu bewegen, und den Formblock (50a) daran hindert, sich in eine zweite Richtung zu bewegen, die quer zu der ersten Richtung liegt; und
Führen des Formblocks (50a) in Ausrichtung mit der Kammer (23) zum dadurch Trinken und in Position zum Schneiden in den Boden der Kammer (23) zum dadurch Trinken, indem der Konturenabschnitt des Formblocks (50a) die Kontur der Mündungsseitenwand (25) berührt, wenn die Montageplatte (42a) sich zum Formschneiden auf die Trageplatte (41) zu bewegt, und somit den Formblock (50a) dazu bringt, sich in die erste Richtung (52) zu bewegen, bevor er in den Boden der Kammer (23) zum dadurch Trinken hinein schneidet.

10. Das Verfahren nach Anspruch 8 oder 9, ferner aufweisend:
Bereitstellen einer Montageplattenbasis (58), die eine Montageplattenkammer (59) umfasst, welche Montageplattenkammer (59) einen seitlich und radial positionierten Montageschlitz (60) hat;
Bereitstellen der Montageplatte (42 & 42a), die innerhalb der Montageplattenkammer (59) schwimmt und ein seitlich und radial positioniertes Flanschglied (48) umfasst, welches Flanschglied (48) derart innerhalb des Montageschlitzes (60) positioniert ist, dass das Flanschglied (48) es dem der Montageplatte (42 & 42a) gestattet, sich seitlich in eine erste Richtung (56) bezüglich der Montageplattenbasis (58) zu bewegen, und die Montageplatte (42 & 42a) daran hindert, sich in eine zweite Richtung zu bewegen, die quer zu der ersten Richtung liegt;
wobei die Montageplatte (42 & 42a) eine Ringform (49a) umfasst, die einen nach innen zeigenden und nach innen geneigten Konturenabschnitt (61) hat, wobei die Außenseitenwand (12) des Materials in Deckelgestalt eine nach außen zeigende und nach innen geneigte Kontur hat; und
Führen der Montageplatte (42 & 42a) in Ausrichtung mit dem Material in Deckelgestalt zum Formschneiden, indem der Konturenabschnitt (61) der Ringform (49a) die Kontur der Außenseitenwand (12) berührt, wenn die Montageplatte (42 & 42a) sich zum Formschneiden des Materials in Deckelgestalt auf die Trageplatte (41) zu bewegt, und somit die Montageplatte (42a) dazu bringt, sich in die erste Richtung zu bewegen, bevor sie in den Boden der Kammer (23) zum dadurch Trinken hinein schneidet.

11. Das Verfahren nach Anspruch 8 oder 9, wobei das Schneiden des Materials in Deckelgestalt mit dem Formblock (50 & 50a) das Schneiden in den Boden der Kammer (23) zum dadurch Trinken hinein, um die Klappe (24) bereitzustellen, umfasst.

12. Das Verfahren nach Anspruch 9 oder 10, wobei das Schneiden des Material in Deckelgestalt mit dem Formblock (50 & 50a) das Schneiden in den Boden der Kammer (23) zum dadurch Trinken hinein, um die Öffnung (29) zum dadurch Trinken bereitzustellen, umfasst.

13. Das Verfahren nach Anspruch 8 oder 9, wobei die Montageplatte (42 & 42a) eine Nadelstanze (44) und eine Ringform (49) umfasst, und das Verfahren ferner aufweist:
die Nadelstanze (44) zum Schneiden des Lüftungslochs (22) in das Material in Deckelgestalt an einer von der Kammer (23) zum dadurch Trinken separaten Stelle; und
die Ringform (49) zum Schneiden des genannten Deckels (10) aus dem umgebenden thermoplastischen Material (10a).

14. Das Verfahren nach Anspruch 10, wobei die Montageplatte (42) eine Nadelstanze (44) umfasst, und das Verfahren ferner aufweist:
die Nadelstanze (44) zum Schneiden eines Lüftungslochs (22) in das Material in Deckelgestalt an einer von der Kammer (23) zum dadurch Trinken separaten Stelle; und
die Ringform (49) zum Schneiden des genannten Deckels (10) aus dem umgebenden thermoplastischen Material.

15. Das Verfahren nach Anspruch 10 oder 14, wobei die Montageplatte (42) durch eine oder mehrere innerhalb des Flanschglieds (48) umfassten Flanschzungen (40) gegen Rotationsbewegungen innerhalb der Basis der Montageplatte (42) gesperrt ist.

## Revendications

1. Couvercle (10) qui est monté sur un gobelet (31) pour une boisson, le couvercle (10) occupant un volume au-dessus du dessus du gobelet (31), le couvercle (10) comprenant:
des surfaces extérieure et intérieure opposées ;
une partie de montage (19) capable de s'ancrer sur le gobelet (31) ;
une paroi latérale extérieure (12) s'étendant vers le haut et s'inclinant loin et radialement vers l'intérieur de la partie de montage (19) et
se terminant sur un dessus (11) ;
une paroi latérale intérieure (13) s'étendant vers le bas depuis le dessus (11) et s'inclinant loin de la paroi latérale extérieure ;
les parois latérales intérieure et extérieure (13 & 12) et le dessus (11) se combinant pour définir une nervure annulaire (11, 12 & 13) ;
une paroi supérieure intérieure (17) sous le dessus (11) et au moins partiellement liée par la paroi latérale intérieure (13) ;
un orifice de consommation (18) dans la nervure (11, 12 & 13) qui permet de boire au gobelet (31) sans retirer le couvercle (10), la nervure (11, 12 & 13) permettant aux lèvres inférieure et supérieure d'un utilisateur d'entourer l'orifice de consommation (18), la lèvre inférieure de l'utilisateur s'engageant avec la paroi latérale extérieure (12) et la lèvre supérieure de l'utilisateur s'engageant avec la paroi latérale intérieure (13) pendant la consommation de la boisson ;
une nervure intérieure (27) définie par la paroi latérale intérieure (13) et une partie du dessus (11) qui inclut l'orifice de consommation (18) ;
un premier segment de l'orifice de consommation (18) occupant la nervure intérieure (27) ;
un second segment de l'orifice de consommation (18) définissant le reste de l'orifice de consommation (18) ; **caractérisé en ce que**
le premier segment est évidé sous le second segment dirigeant ainsi la boisson présentant une partie moussée remontant en bulle par l'orifice de consommation (18), pour s'écouler sur la nervure intérieure (27) et sur la paroi latérale intérieure (13) avec le gobelet (31) dans une position essentiellement verticale.

2. Couvercle (10) selon la revendication 1, le couvercle (10) comprenant en outre :
une chambre de consommation (23) dans la nervure (11, 12 & 13), la chambre de consommation (23) présentant un dessus ouvert et une paroi latérale d'orifice de limitation (25) s'étendant vers le bas depuis un périmètre de l'orifice de consommation (18) et se terminant au niveau d'un fond ; et
une ouverture de consommation (29) dans le fond de la chambre de consommation (23).

3. Couvercle (10) selon la revendication 1, le couvercle (10) étant défini en outre par :
une chambre de consommation (23) dans la nervure (11, 12 & 13), la chambre de consommation (23) présentant un dessus ouvert et une paroi latérale d'orifice de limitation (25) s'étendant vers le bas depuis un périmètre de l'orifice de consommation (18) et se terminant au niveau d'un fond ;
un rabat (24) dans le fond de la chambre de consommation (23), le rabat (24) présentant une position relâchée et une position non relâchée ; et
le rabat (24) incluant une partie d'articulation (26), la partie d'articulation (26) reliant le rabat (24) à la chambre de consommation (23) et permettant au rabat (24) de se plier dans la position non relâchée lorsqu'il est soumis à une pression d'air négative appliquée à l'orifice de consommation (18) généré par l'utilisateur pendant la consommation de la boisson, fournissant ainsi une ouverture de consommation (29) et permettant à la boisson de passer par l'orifice de consommation (18) avec le gobelet (31) dans une position penchée, et pour rester autrement dans la position relâchée restreignant ainsi la sortie de la boisson par l'orifice de consommation (18) lorsque la boisson fluctue avec le gobelet (31) dans une position essentiellement verticale.

4. Couvercle (10) selon la revendication 1, 2 ou 3, le couvercle (10) comprenant en outre :
une paroi latérale intérieure (16) s'étendant vers le bas depuis la paroi supérieure intérieure (17) et liée latéralement par la paroi latérale intérieure (13) ;
une cavité de déversement (14) définie par la paroi latérale intérieure (13) et la paroi latérale intérieure (16), la cavité de déversement (14) étant configurée pour permettre à la lèvre supérieure de l'utilisateur de s'engager avec une partie de la paroi latérale intérieure (13) dans la cavité de déversement (14) pendant la consommation de la boisson ; et
la cavité de déversement (14) étant configurée pour collecter la boisson s'écoulant sur la nervure intérieure (27) et sur la paroi latérale intérieure (13) avec le gobelet (31) dans une position essentiellement verticale.

5. Couvercle (10) selon la revendication 4, dans lequel :
la cavité de déversement (14) est en outre définie par la paroi latérale intérieure (16) présentant une courbure arquée, la courbure arquée se courbant loin de l'orifice de consommation (18), fournissant ainsi un espace supplémentaire pour la lèvre supérieure de l'utilisateur ; et
le couvercle (10) présentant un centre et la paroi latérale intérieure arquée (16) présentant un centre, le centre de la paroi latérale intérieure arquée (16) passant près du centre du couvercle (10) ;
un trou d'aération (22) adjacent au centre de la paroi latérale intérieure arquée (16), le trou d'aération (22) étant en communication fluidique avec la cavité de déversement (14) et étant configuré pour aérer l'air dans le gobelet (31) pendant la consommation de la boisson.

6. Couvercle (10) selon la revendication 1, 2, 3, 4 ou 5, dans lequel la paroi supérieure intérieure (17) est en outre définie par une partie de paroi principalement planaire s'inclinant vers le bas loin de l'orifice de consommation (18) pour inclure une zone inférieure de la paroi supérieure intérieure (17), la partie de paroi principalement planaire étant configurée pour fournir un espace supplémentaire pour le nez de l'utilisateur pendant la consommation de la boisson.

7. Couvercle (10) selon la revendication 1, 2, 3, 4, 5 ou 6, dans lequel la nervure (11, 12 & 13) inclut une paire d'évidements biseautés (20) dans une partie de la paroi latérale intérieure (13) et le dessus (11), chacun des évidements biseautés (20) étant positionné sur un côté respectif de l'orifice de consommation (18) et étant configuré pour s'engager avec la lèvre supérieure de l'utilisateur pendant la consommation de la boisson.

8. Procédé de formation et de coupe du couvercle (10) selon la revendication 2 ou la revendication 3 pour un gobelet de boisson (31) à partir d'une feuille thermoplastique non formée, un matériau qui devient pliable au-dessus d'une température spécifique et retient une forme moulée suite au refroidissement, ledit couvercle (10) incluant les propriétés de la revendication 3, ledit procédé comprenant :
la fourniture d'une plaque de support (41) qui est réalisée sous la forme dudit couvercle (10) et est configurée pour servir de moule pour former sous vide la feuille thermoplastique non formée, la plaque de support (41) étant en outre configurée pour fournir de multiples surfaces de réception pour la découpe de matrice ;
la formation de la feuille thermoplastique non formée sur la plaque de support (41) dans un matériau en forme de couvercle, le matériau en forme de couvercle incluant la chambre de consommation (23) avec la paroi latérale d'orifice (25) ;
la fourniture d'une plaque de montage (42) qui inclut une matrice de bloc (50), la matrice de bloc (50) présentant une partie à contour tourné vers l'extérieur et s'inclinant vers l'intérieur (52) et une partie de coupe (51) pour couper dans la chambre de consommation (23) ;
la fourniture d'une paroi latérale d'orifice (25) avec un contour tourné vers l'intérieur et s'inclinant vers l'intérieur, la partie à contour (52) de la matrice de bloc (50) s'alignant sur le contour de la paroi latérale d'orifice (25) avant que la matrice de bloc (50) ne se découpe dans le fond de la chambre de consommation (23).

9. Procédé selon la revendication 8, comprenant en outre :
la fourniture d'une plaque de montage (42a) qui inclut une chambre de matrice de bloc (55), la chambre de matrice de bloc (55) présentant une fente de montage positionnée latéralement et radialement (57) ;
la fourniture de la matrice de bloc (50a) qui flotte dans la chambre de matrice de bloc (55), et inclut un élément de bride positionné latéralement et radialement (54), l'élément de bride (54) étant positionné dans la fente de montage (57) de sorte que l'élément de bride (54) permette à la matrice de bloc (50a) de se déplacer latéralement dans une première direction (56) par rapport à la plaque de montage (42a) et empêche la matrice de bloc (50a) de se déplacer dans une seconde direction qui est transversale par rapport à la première direction ; et
le guidage de la matrice de bloc (50a) en alignement sur la chambre de consommation (23) et en position pour la découpe dans le fond de la chambre de consommation (23) par la partie à contour de la matrice de bloc (50a) touchant le contour de la paroi latérale d'orifice (25) lorsque la plaque de montage (42a) se déplace vers la plaque de support (41) pour la découpe de la matrice, amenant ainsi la matrice de bloc (50a) à se déplacer dans la première direction (52) avant la découpe dans le fond de la chambre de consommation (23).

10. Procédé selon la revendication 8 ou 9, comprenant en outre :
la fourniture d'une base de plaque de montage (58) qui inclut une chambre de plaque de montage (59), la chambre de plaque de montage (59) présentant une fente de montage positionnée latéralement et radialement (60) ;
la fourniture de la plaque de montage (42 & 42a) qui flotte dans la chambre de plaque de montage (59), et inclut un élément de bride positionné latéralement et radialement (48), l'élément de bride (48) étant positionné dans la fente de montage (60) de sorte que l'élément de bride (48) permette à la plaque de montage (42 & 42a) de se déplacer latéralement dans une première direction (56) par rapport à la base de plaque de montage (58) et d'empêcher la plaque de montage (42 & 42a) de se déplacer dans une seconde direction qui est transversale par rapport à la première direction ;
la plaque de montage (42 & 42a) incluant une matrice annulaire (49a) présentant une partie à contour tourné vers l'intérieur et s'inclinant vers l'intérieur (61), la paroi latérale extérieure (12) du matériau en forme de couvercle présentant un contour tourné vers l'extérieur et s'inclinant vers l'intérieur ; et
le guidage de la plaque de montage (42 & 42a) en alignement sur le matériau en forme de couvercle pour la découpe de matrice par la partie à contour (61) de la matrice annulaire (49a) touchant le contour de la paroi latérale extérieure (12) lorsque la plaque de montage (42 & 42a) se déplace vers la plaque de support (41) pour la découpe de matrice du matériau en forme de couvercle, amenant ainsi la plaque de montage (42a) à se déplacer dans la première direction avant la découpe dans le fond de la chambre de consommation (23).

11. Procédé selon la revendication 8 ou 9, dans lequel la découpe du matériau en forme de couvercle avec la matrice de bloc (50 & 50a) comprend la découpe dans le fond de la chambre de consommation (23) pour fournir le rabat (24).

12. Procédé selon la revendication 9 ou 10, dans lequel la découpe du matériau en forme de couvercle avec la matrice de bloc (50 & 50a) comprend la découpe dans le fond de la chambre de consommation (23) pour fournir l'ouverture de consommation (29).

13. Procédé selon la revendication 8 ou 9, dans lequel la plaque de montage (42 & 42a) inclut un aiguilletage (44) et une matrice annulaire (49) et le procédé comprend en outre :
l'aiguilletage (44) pour la découpe du trou d'aération (22) dans le matériau en forme de couvercle à un emplacement séparé de la chambre de consommation (23) ; et
la matrice annulaire (49) pour la découpe dudit couvercle (10) à partir du matériau thermoplastique environnant (10a).

14. Procédé selon la revendication 10, dans lequel la plaque de montage (42) inclut un aiguilletage (44), et le procédé comprend en outre :
l'aiguilletage (44) pour la découpe d'un trou d'aération (22) dans le matériau en forme de couvercle à un emplacement séparé de la chambre de consommation (23) et
la matrice annulaire (49) pour la découpe dudit couvercle (10) à partir du matériau thermoplastique environnant.

15. Procédé selon la revendication 10 ou 14, dans lequel la plaque de montage (42) est retreinte dans son mouvement rotatif dans la base de plaque de montage (42) par une ou plusieurs pattes de bride (40) incluses dans l'élément de bride (48).
